# EUROPEAN PATENT APPLICATION

(11) **EP 1 499 120 A2**
(43) Date of publication of application: **19.01.2005**
(21) Application number: 04254211.8
(22) Date of filing: 14.07.2004
(51) Int. Cl.: H04N 5/775

(54) **Improvements in or relating to digital television recording and playback**

(30) Priority: 15.07.2003 GB 0316471
(71) Applicant: 4TV Limited, Northwich, Cheshire CW9 7LS (GB)
(72) Inventor: Austin, Kenneth, Llong, Mold, CH7 4JP (GB)
(74) Representative: Cardwell, Stuart Martin

(57) **Abstract**

Apparatus for receiving storing and displaying digital television programs comprising first (1) and second (2) parts. The first part comprises a base station and the second part comprises a portable player unit that incorporates a digital storage device (23) for recording and playback of digital television programs. The base station incorporates a digital television receiver (T1, T2) operable to supply decoded television signals to a primary television (31) connected to said base station, and the base station digital receiver is adapted to supply coded digital television program to said digital storage device (23) in the portable player unit (2). The base station comprises a docking station (1) for the portable player unit (2) and the portable player unit (2) incorporates a display device (27). In addition means is provided for programming record events and to display pending scheduled recording events. One or both of the first and second parts incorporate said means for programming record events and means to display pending scheduled recording events.

Means is provided to synchronize scheduled record events independently created on the portable player unit and the docking station.

The system components operate in at least two modes depending on whether said components are operated as a single digital television system or as two independent units.

## Description

The present invention relates to improvement in or relating to digital television recording and playback.

Digital television receivers are now in wide spread use and most countries have plans to switch off conventional analogue broadcasts and rely solely on digital networks. These networks currently utilise satellite, cable or terrestrial broadcast technologies, which present significant problems for portable devices and mobile systems.

A further problem associated with digital television is that most households are not equipped to receive digital signals and the ones that are mostly have a single room dedicated to digital television viewing. This can be a problem when a viewer wants to watch digital TV in a different room, or where more than one viewer wants to watch different TV programs.

The aim of the present invention is to provide a system that enables digital television to be viewed in different rooms, different locations or while on the move. A further aim of the system is to provide a means for enabling the simultaneous viewing on more than one display of different digital television programs. Yet a further aim is to provide a system of components that operate in different modes depending on whether the components are operational as a single digital television unit or two or more independent units. Yet a further aim of the invention is to provide a means for scheduling programs that may be viewed in the different operating modes of the system.

Many attempts have been made to solve these problems associated with digital television. In particular several manufacturers have developed devices to relay television signals between rooms within a building. Response Electronics PLC have developed the Video Sender, which uses wireless technology to transmit TV signals on a 2.4GHz carrier over short distances. SKY Digital PLC has developed the SKY + system that uses coaxial cabling to distribute signals from a main receiver to additional TVs also using television signals modulated onto a RF carrier. The system is adapted to receive two simultaneous television broadcasts for recording or viewing. A first program can be recorded on a hard disk while the viewer watches a second program on a television screen.

These systems are useful for distributing digital television programs around a house but are not suitable for viewing digital television programs while on the move or in remote locations.

The invention provides a means for viewing digital television programs that may be viewed via the primary television, a secondary television or while on the move. The invention achieves this by separating the processes of receiving, recording and viewing digital broadcasts. These processes are assigned to a system comprised of two components; a portable unit incorporating a digital recorder/player and preferably incorporating a display, and a base station comprising a digital receiver and means for connecting it to a primary television receiver and an aerial, dish or cable supplying a digital television signal.

Separate connection lines may be provided to link the units electronically. Preferably the base station is constructed as a docking station for the portable unit. The base station and portable player can be operated together as a system for receiving and displaying digital television broadcasts and further be able to record and playback programs using digital storage within the portable unit. The portable unit may be removed from the base station without affecting digital television viewing on the primary television, enabling, for example, another family member to watch a recorded program either directly on the portable unit or via an AV cable connected to the portable unit on a secondary television. Such a system is of great utility as it allows a viewer to take the unit on holiday, to work or use the unit while on public transport. It allows play back of, for example, films, news items, music videos and sports events. The unit also allows a viewer to record a film to be viewed at another location, eg: when connected via the AV cable to a secondary television. Thus the portable unit can be used as either a standalone portable player using an integral display, or can be connected to another television via an AV cable, or while docked in the base station, to provide digital recording and play back facilities to the main television in a home environment.

It is preferred that means is provided in at least one and preferably in both component parts to store and display pending record events. More preferably means is provided in at least one component and preferably both to program in future desired record events. The viewer may also from time to time review recording options on either the portable unit or the base station through the use of onscreen information and menus.

When the portable unit is removed from the docking station means is provided whereby the display of the portable unit indicates whether there are pending record events informing the viewer when the portable unit will need to be returned to the docking station as recording requires the portable unit to be associated with the docking station.

Thus in a preferred embodiment while the portable unit is removed from the docking station both the portable unit and the base station are able to display future program schedule information and either unit used to schedule future programs for recording. On returning the portable unit to the base station, any contention between scheduled record events is resolved, conveniently through on screen prompts and user options which are preferably selectable using an infrared remote control device.

Accordingly one aspect of the present invention provides a digital television decoding, recording and playback apparatus comprising a first component and at least one second component, the first component comprising a digital receiver and the second component comprising a portable unit comprising digital recording and playback circuits, and wherein the first component has an input to receive an encoded digital television signal, and a first output for supplying a decoded television signal to a primary television receiver and a second output for supplying coded digital television program signals to said second component, and wherein the second component further comprises a means for supplying a decoded television signal to a viewing screen.

Preferably the second component has an output connection for supplying the decoded television signal to a secondary television receiver/viewing screen. More particularly, the second component has an integral viewing screen that receives said decoded television signal and which is provided as an alternative to or as an addition to said output connection.

The first component is preferably powered from a mains source. The second component is preferably battery powered, with the option of an additional mains power supply.

The first and second components both include processor circuitry with memory means for use in controlling the operation thereof in the various modes described hereinafter. The memory means stores program scheduling information including program schedule listings and future programmed recording events. Means is provided for displaying program scheduling information on screen. The processors of the first and second components are preferably connectable via a processor connector, to facilitate synchronization/reconciliation of program scheduling information.

For convenience, the first component is constructed as a docking station for the second component to avoid the need for making several individual connections between the two components. More particularly the docking station provides for:-
i) direction connection of the coded digital television program signal output from the first component to the input line of the second component.
ii) a direct connection of the coded digital television program signal output of the second component to the first component.
iii) direct connection of the respective processors, and
iv) a power supply connection between the first component and the second component for powering the second component when connected thereto and/or for charging the battery of the second component.

The first unit preferably includes at least two tuners which can be operated individually to permit viewing of one program whilst recording another. Additional tuners may be provided where the apparatus is required to allow more than one program is to be recorded simultaneously, in which case the second component has the processor and digital storage facility constructed appropriately. Most usually a single digital storage medium is provided which is sufficient for two tuners, for each tuner circuitry the requisite number of additional connection lines are provided in the two units.

Whilst mention has been made above of the apparatus comprising two components, this is not intended to exclude the possibility of there being more than one second component (eg: portable digital recorder/player) that is each connectible with the first component (eg: digital receiver) to be used with it or independently of it as described herein in relation to said second component. Where this is the case the first component has programming and memory means configured appropriately to store the record events of different second components and to reconcile any conflicts between future record events.

The present invention will now be described further hereinafter, by way of example only, with reference to the accompanying drawings in which:-
Figure 1a is a perspective view of one embodiment of apparatus according to the invention showing the two components parts thereof spaced apart,
Figure 1b is a perspective view of one of the components of figure 1a, with a viewing screen deployed,

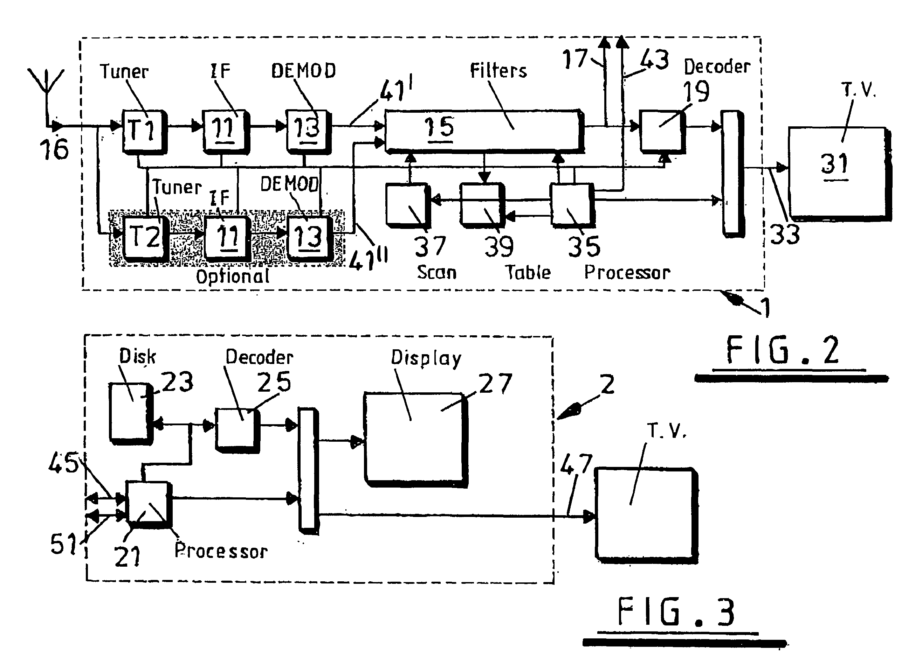

Figure 2 is a schematic block diagram of one part of the apparatus, and
Figure 3 is a schematic block diagram of a second part of the apparatus.

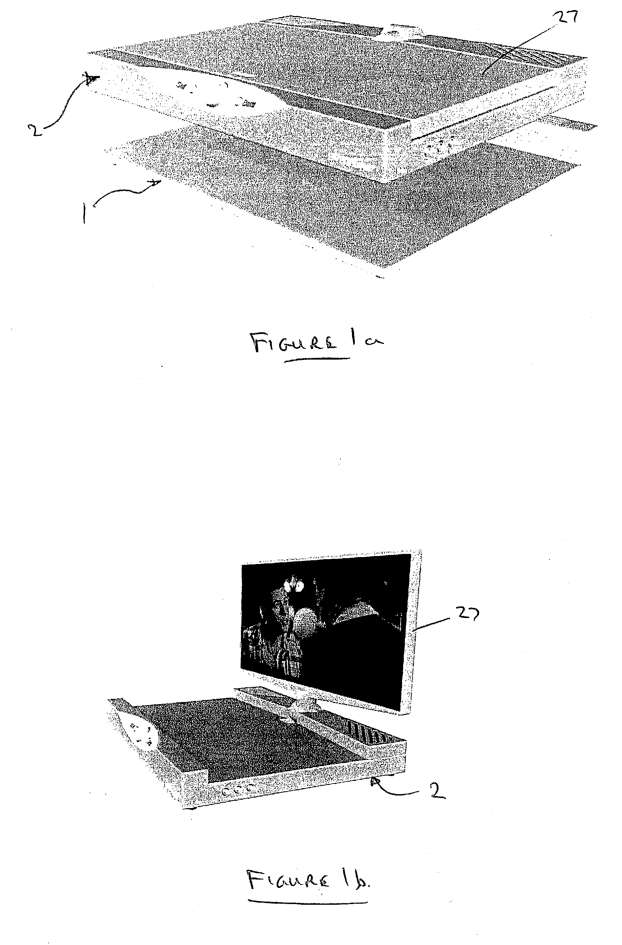

Referring firstly to figure 1a, apparatus according to the invention comprises a first component, represented by dotted outline 1, and a second component represented by dotted outline 2. The first component 1 comprises a digital receiver and is configured in the form of a docking station for the second component. The second component, shown in figure 1b, comprises a processor 21, a digital storage device 23, a decoder 25 and a display screen 27. In figure 1a the second component is shown with the viewing screen in its folded away position, and in figure 1b in a position raised for use.

More particularly, the docking station 1 incorporates two tuners T1,T2 in the illustrated embodiment an associated IF section 11, demodulator 13 and further comprising a filter unit 15 which are operable to extract coded digital television program signals from the transmitted digital television signal input at 16. The docking station 1 further comprises an output line 17 for the coded digital television program signal and a decoder 19 for generating decoded television signals from the coded digital television program signals which are output in a form for viewing on a television screen 31, eg: the primary television, an output connection 33 being provided for same. The docking station 1 further comprises a processor 35 (with memory - not illustrated separately), scanning circuitry 37 and a look-up table memory 39 which operate in conjunction with the filter 15 to extract coded digital television program data from the demodulated data stream input to the filter at 41' 41". One filter system is shown, but there may be a separate filter system for each tuner output.

The processor 35 and its memory include means for controlling the operation of the two tuners T1,T2 and may control routing of the output signals. A mains power supply having the appropriate rectifier and voltage regulation circuitry (not illustrated) is provided for the docking station. The processor 35 has a synchronisation control line 43 to connect with the processor 21 of the second component.

The second component 2 is in the form of a portable unit, being battery powered, with optional mains adaptor, and comprises an input 45 for the coded digital television program signal emerging on line 17 from the first component, the processor 21 (with memory - not illustrated) for receiving the aforesaid signal, the digital storage device 23 eg: hard disk, for storing the coded digital television program signal, and decoder 25 for producing decoded television signals and the integrated display screen 27. The latter is conveniently of LCD type. Also provided is an output connection 47 for relaying decoded television signals to an external television screen 49. A further signal line 51 is provided from the processor 21 to connect with the processor 35 of the docking station via line 43. This is used for synchronizing the program schedule information, and future program record events which are stored in the memories.

The apparatus according to the invention has three principal modes of operation that are described further hereinafter. In a first mode the portable player 2 is placed within the proximity of the base station 1 whereby its functions are enslaved to the base station and the primary television 31. The base station functions as a digital television receiver with integrated digital recorder, its output being displayed via the primary television. Program schedule information is provided via an onscreen display to schedule programs to be recorded for viewing remotely on the player unit or the primary television display. Schedule information is synchronized between the portable and base station units. The recording rate of the coded digital television program signal may be at broadcast bit rates. Optionally a compression system may be employed to provide increased storage capacity.

The base station also facilitates connection to the primary television, provides mains voltage operation and recharges the portable unit battery via conventional circuitry that is not described and illustrated.

In a second mode the portable player 2 is removed from the docking station 1 for viewing recorded programs on the integral display 27. The portable unit gives a warning to the viewer of any pending scheduled recordings. The docking station connected to the primary television continues to operate as a conventional receiver providing uninterrupted viewing of live digital broadcasts. Program schedules and pending record events are synchronized when the portable unit 2 is returned to the docking station.

While removed from the docking station programs may be scheduled for recording via either the docking station 1 or portable unit 2 using on-screen program guides. Recordings will automatically commence at the allocated time when the portable unit is returned to the docking station.

The unit is powered either from an internal battery or from an additional plug in power adapter, neither of which is illustrated.

In a third mode the portable player 2 is removed from the docking station 1 for viewing recorded programs on a secondary television 49 either in another room or at a remote location. The portable unit 2 gives a warning to the viewer of any pending scheduled recordings. The docking station 1 connected to the primary television continues to operate as a conventional receiver providing uninterrupted viewing of live digital broadcasts. Program schedules and pending record events are synchronized when the unit is returned to the docking station.

Decoding of the digital television signals is performed in a conventional manner and is not described further hereinafter. The programming, storage and display of record events is performed in the usual manner with appropriate program software, memory means, and on screen graphic display software being provided in each of the two units, and with the additional facility to alert the user of the second unit at least when removed from the base unit, to pending record events, eg: by a warning light, buzzer and/or on screen display. This program circuitry includes means for checking for future programming events and may also include means to provide further warnings of pending record events. Furthermore, the software programming includes means for flagging up conflicts between record events programmed into the memory of the base unit and the portable unit, and provides means by on screen user prompts to reconcile differences.

## Claims

1. Apparatus for receiving storing and displaying digital television programs comprising first (1) and second (2) parts and having a digital storage device (23) for recording and playback of digital television programmes, and a digital television receiver, **characterised in that**; the first part comprises a base station and the second part comprises a portable player unit that incorporates the digital storage device (23) for recording and playback of digital television programs, and wherein said base station incorporates the digital television receiver (T1, T2) operable to supply decoded television signals to a primary television (31) connected to said base station, and wherein said base station digital receiver is adapted to supply coded digital television program to said digital storage device (23) in the portable player unit, and further comprising means for programming record events and means to display pending scheduled recording events.

2. Apparatus as claimed in claim 1 in which the base station comprise a docking station (1) for the portable player unit (2).

3. Apparatus as claimed in claim 1 and 2 in which the portable player unit (2) incorporates a display device (27).

4. Apparatus as claimed in claim 1, 2 or 3 in which the first part incorporates means for programming record events and means to display pending scheduled recording events.

5. Apparatus as claimed in claim 1, 2, 3 and 4 in which the second part incorporates said means for programming record events and means to display pending scheduled recording events.

6. Apparatus as claimed in any preceding claim and further comprising a warning means to alert a user to pending scheduled record events.

7. Apparatus as claimed in any preceding claim and further comprising means to synchronize scheduled record events independently created on the portable player unit and the docking station.

8. Apparatus as claimed in any of the preceding claims in which said system components operate in at least two modes depending on whether said components are operated as a single digital television system or as two independent units.
